(19) Europäisches Patentamt
European Patent Office
Office européen des brevets

(11) **EP 4 242 265 B1**

(12) **EUROPEAN PATENT SPECIFICATION**

(45) Date of publication and mention of the grant of the patent:
**22.04.2026 Bulletin 2026/17**

(21) Application number: **22759496.7**

(22) Date of filing: **18.02.2022**

(51) International Patent Classification (IPC):
***C08L 69/00*** *(2006.01)* ***C08K 3/16*** *(2006.01)*
***C08K 3/32*** *(2006.01)* ***H01M 10/0565*** *(2010.01)*
***C09D 169/00*** *(2006.01)*

(52) Cooperative Patent Classification (CPC):
(C-Sets available)
**C08K 3/105; C08L 69/00; C09D 169/00; H01M 10/052; H01M 10/0565; H01M 10/0568; H01M 10/0569;** C08G 64/06; C08G 64/10; H01M 2300/0085; Y02E 60/10 (Cont.)

(86) International application number:
**PCT/JP2022/006525**

(87) International publication number:
**WO 2022/181460 (01.09.2022 Gazette 2022/35)**

(54) **RESIN COMPOSITION, COATING FILM USING SAME, AND ELECTROLYTE**

HARZZUSAMMENSETZUNG, BESCHICHTUNGSFILM DAMIT UND ELEKTROLYT

COMPOSITION DE RÉSINE, FILM DE REVÊTEMENT UTILISANT CELLE-CI ET ÉLECTROLYTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2021 JP 2021028691**

(43) Date of publication of application:
**13.09.2023 Bulletin 2023/37**


(73) Proprietor: **MITSUBISHI GAS CHEMICAL COMPANY, INC.**
**Chiyoda-ku**
**Tokyo 100-8324 (JP)**

(72) Inventors:
- **OGAWA, Noriyoshi**
**Kamisu-shi, Ibaraki 314-0102 (JP)**
- **GOTO, Toshihito**
**Kamisu-shi, Ibaraki 314-0102 (JP)**

(74) Representative: **Hoffmann Eitle**
**Patent- und Rechtsanwälte PartmbB**
**Arabellastraße 30**
**81925 München (DE)**



(56) References cited:
**CN-A- 105 811 002**
**CN-A- 105 811 002**
**JP-A- 2000 058 128**
**JP-A- 2001 291 529**
**JP-A- 2001 325 990**
**JP-A- 2001 325 990**
**JP-A- 2011 154 853**
**JP-A- 2011 210 635**
**JP-A- 2015 230 830**
**JP-A- 2019 057 399**
**US-A1- 2021 036 328**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).





Processed by Luminess, 75001 PARIS (FR)



**(Cont. next page)**

(52) Cooperative Patent Classification (CPC): (Cont.)

C-Sets
C08K 3/105, C08L 69/00

## Description

### Technical Field

The present invention relates to a resin composition that has low toxicity and can be easily applied as an ink or a painting material, and a coating film and an electrolyte using the same.

### Background Art

The intended use of a specific polycarbonate resin, in which the polycarbonate resin is dissolved in an organic solvent and is used as an ink or a painting material, has been known, and various organic solvents have been used therefor. In recent years, a shift from halogen-based organic solvents, toluene, 1,4-dioxane and the like having safety concerns for humans, to safer solvents, has been promoted (Patent Literature 1).

On the other hand, carbonate-based solvents such as dimethyl carbonate and ethylene carbonate have relatively high safety, and thus, such carbonate-based solvents have been widely used as electrolyte solvents for lithium ion batteries. However, in order to use such a carbonate-based solvent as a polycarbonate electrolyte, there has been room for improvement, since the solubility of a polycarbonate resin in a carbonate-based solvent is low and a coating film is hardly obtained. In order to solve such a problem, various studies have been conducted, and for example, it has been proposed that methylene chloride is added as a solvent and the resin is coated as a colloidal solution (Patent Literature 2). However, since methylene chloride is a halogen-based solvent causing a large environmental impact, there have been concerns about its safety for humans.

JP 2001-325990 A relates to a polymer solid electrolyte comprising a polycarbonate and an ionically dissociated Group I or Group II metal salt, the polycarbonate having a bisphenol-derived structural unit (A) and a polysiloxane structural unit (B), wherein the structural unit (B) accounting for 20 to 70% by weight of all structural units, and the limiting viscosity of 0.2 to 2.0 dL/g.

CN 105811002 A concerns an organic-inorganic composite all-solid electrolyte which is composed of polycarbonate polymer, inorganic fast ion conductor, lithium salt, and porous rigid support material, wherein the organic-inorganic composite all-solid electrolyte has a thickness of 5 to 2000 μm, a mechanical strength of 2 to 150 MPa, the room temperature ionic conductivity of $1 \cdot 10^{-4}$ to $6 \cdot 10^{-3}$ S/cm, and the electrochemical window of greater than 4V.

### Citation List

### Patent Literature

Patent Literature 1: WO2018/123282
Patent Literature 2: JP Patent Publication (Kokai) No. 2000-357533 A

### Summary of Invention

### Technical Problem

It is an object of the present invention to provide a resin composition that has low toxicity and can be easily applied as an ink or a painting material, and a coating film and an electrolyte using the same.

The present inventors have focused on a carbonate-based organic solvent with low toxicity. However, a common bisphenol A-type polycarbonate resin cannot be dissolved in such a carbonate-based organic solvent. Thus, for dissolution of a polycarbonate resin, it has been necessary to improve the solubility of the polycarbonate resin itself in a solvent and then, to combine the polycarbonate resin with an optimal carbonate-based solvent.

### Solution to Problem

The present inventors have conducted intensive studies directed towards achieving the aforementioned object. As a result, the present inventors have found that a polycarbonate resin having a specific constituent unit has excellent solubility in a carbonate-based organic solvent with low toxicity, thereby completing the present invention.

Specifically, the present invention is as follows.

< 1 > A resin composition, comprising:

a polycarbonate resin comprising a constituent unit represented by the following general formula (1):

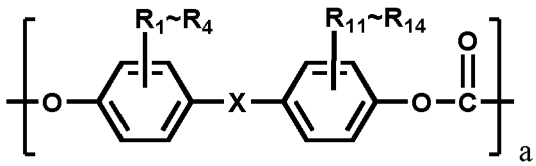 (1)

wherein

$R_1$ to $R_4$ and $R_{11}$ to $R_{14}$ each independently represent hydrogen, fluorine, chlorine, bromine or iodine, or an alkyl group containing 1 to 20 carbon atoms, an aryl group containing 6 to 12 carbon atoms, an alkenyl group containing 2 to 12 carbon atoms, an alkoxy group containing 1 to 5 carbon atoms, or an aralkyl group containing 7 to 17 carbon atoms, each of which optionally has a substituent,

a represents an integer of 1 to 1,000, and

X represents the following:

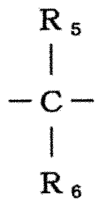、$-S-$、$-(CH_2)_b-$、$-O-$、$-SO-$、$-CO-$、$-SO_2-$、

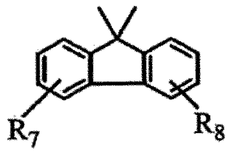、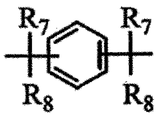 or 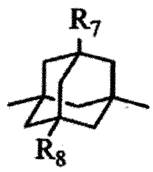

wherein, $R_5$ and $R_6$ each independently represent hydrogen, fluorine, chlorine, bromine or iodine, or an alkyl group containing 1 to 20 carbon atoms, an alkoxy group containing 1 to 5 carbon atoms, or an aryl group containing 6 to 12 carbon atoms, each of which optionally has a substituent, or $R_5$ and $R_6$ bind to each other to form a carbocyclic ring containing 5 to 20 carbon atoms, or a heterocyclic ring having 5 to 12 elements,

$R_7$ and $R_8$ each independently represent hydrogen, fluorine, chlorine, bromine or iodine, or an alkyl group containing 1 to 9 carbon atoms, an alkoxy group containing 1 to 5 carbon atoms, an alkenyl group containing 2 to 12 carbon atoms, or an aryl group containing 6 to 12 carbon atoms, each of which optionally has a substituent, and

b represents an integer of 0 to 20; and

a carbonate-based organic solvent, wherein

the content of the polycarbonate resin in the resin composition is 0.05% to 50% by mass,

the content of the carbonate-based organic solvent in the resin composition is 50% to 99.5% by mass, and

the total percentage of constituent units represented by the following formulae (2) to (4) in all of the constituent units represented by the general formula (1) is 0% to 75% at a molar percentage:

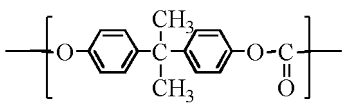 (2)

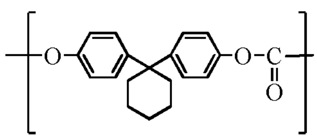 (3)

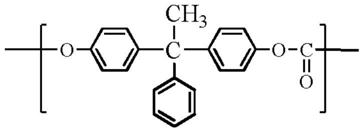

(4)

wherein the constituent unit represented by the general formula (1) comprises one or more types selected from the group consisting of constituent units represented by the following formulae (6) to (9):

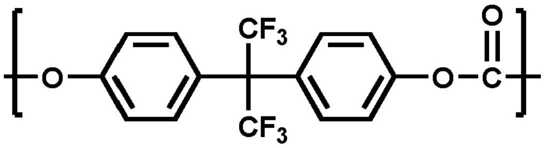

(6)

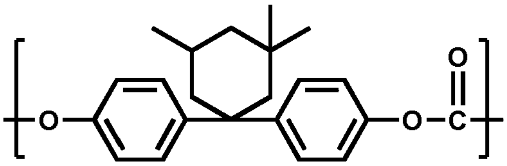

(7)

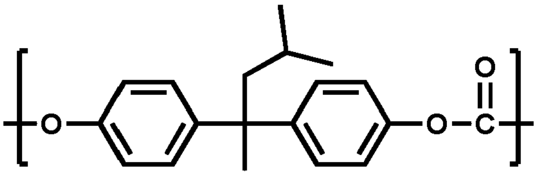

(8)

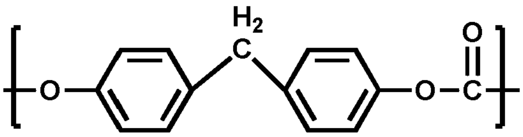

(9).

< 2 > The resin composition according to the above < 1 >, wherein the content of the carbonate-based organic solvent in the resin composition is 70% to 99% by mass.

< 3 > The resin composition according to the above < 1 > or < 2 >, wherein the carbonate-based organic solvent comprises at least one type selected from the group consisting of dimethyl carbonate, diethyl carbonate, and methyl ethyl carbonate.

< 4 > The resin composition according to the above < 3 >, wherein the carbonate-based organic solvent further comprises ethylene carbonate.

< 5 > The resin composition according to any one of the above < 1 > to < 4 >, wherein the constituent unit represented by the general formula (1) comprises one or more types selected from the group consisting of the constituent units represented by the formulae (6), and (8).

< 6 > The resin composition according to any one of the above < 1 > to < 5 >, wherein the polycarbonate resin has a limiting viscosity of 0.3 to 2.0 dl/g.

< 7 > The resin composition according to any one of the above < 1 > to < 6 >, which does not comprise organic solvents other than the carbonate-based organic solvent.

< 8 > A coating film prepared by drying the resin composition according to any one of the above < 1 > to < 7 >.

< 9 > An electrolyte prepared by dissolving 0.1% to 30% by mass of lithium salts in the resin composition according to any one of the above < 1 > to < 7 >.

< 10 > The electrolyte according to the above < 9 >, wherein the lithium salts comprise at least one of $LiPF_6$ and $C_2F_6LiNO_4$.

< 11 > A polymer gel electrolyte prepared by gelatinizing the electrolyte according to the above < 9 > or < 10 >.

< 12> The polymer gel electrolyte according to the above < 11 >, wherein the electrical conductivity is 1 to 30,000 μS/cm.

Advantageous Effects of Invention

The resin composition of the present invention has low toxicity compared with conventional polycarbonate resin solutions, and also, the present resin composition can be easily applied as an ink or a painting material, and the present resin composition is suitable for being coated onto, for example, various types of substrates to form a coating layer. Furthermore, the resin composition of the present invention is advantageous in that it is compatible with lithium salts, and exhibits conductivity even in a state in which a polycarbonate resin is dissolved, so that it functions as an electrolyte.

Description of Embodiments

Hereinafter, the present invention will be described in detail in the following embodiments and illustrative examples. However, these embodiments and illustrative examples are not intended to limit the scope of the present invention, which is defined by the claims.

[Resin composition]

The resin composition of the present invention is a resin composition, comprising:

a polycarbonate resin comprising a constituent unit represented by the following general formula (1):

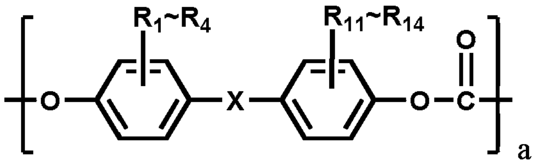 (1);

and
a carbonate-based organic solvent, wherein
the content of the polycarbonate resin in the resin composition is 0.05% to 50% by mass,
the content of the carbonate-based organic solvent in the resin composition is 50% to 99.5% by mass, and
the total percentage of constituent units represented by the following formulae (2) to (4) in all of the constituent units represented by the general formula (1) is 0% to 75% at a molar percentage:

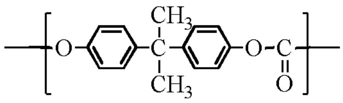 (2)

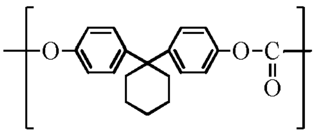 (3)

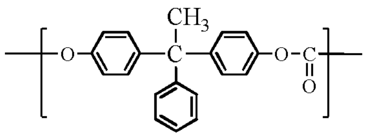 (4)

In the above general formula (1),
$R_1$ to $R_4$ and $R_{11}$ to $R_{14}$ each independently represent hydrogen, fluorine, chlorine, bromine or iodine, or an alkyl group containing 1 to 20 carbon atoms, an aryl group containing 6 to 12 carbon atoms, an alkenyl group containing 2 to 12 carbon atoms, an alkoxy group containing 1 to 5 carbon atoms, or an aralkyl group containing 7 to 17 carbon atoms, each of which optionally has a substituent.

It is to be noted that the "substituent" in the phrase "optionally have a substituent" may include "a fluorine atom, a chlorine atom, a bromine atom, an iodine atom, an alkyl group containing 1 to 7 carbon atoms, an aryl group containing 6 to 12 carbon atoms, an alkenyl group containing 2 to 7 carbon atoms, an alkoxy group containing 1 to 5 carbon atoms, an aralkyl group containing 7 to 17 carbon atoms" and the like (the same applies hereafter).

In the above general formula (1), a represents an integer of 1 to 1,000, preferably an integer of 10 to 900, and more preferably an integer of 30 to 600.

In the above general formula (1), X represents the following:

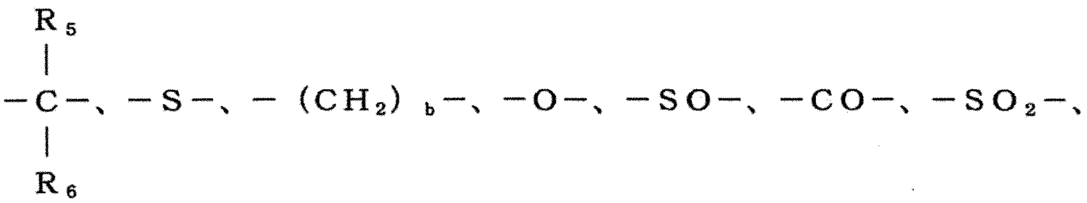

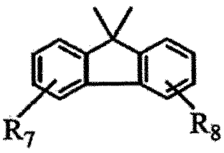 、 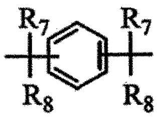 or 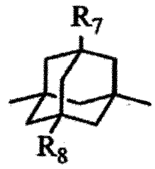

wherein, $R_5$ and $R_6$ each independently represent hydrogen, fluorine, chlorine, bromine or iodine, or an alkyl group containing 1 to 20 carbon atoms, an alkoxy group containing 1 to 5 carbon atoms, or an aryl group containing 6 to 12 carbon atoms, each of which optionally has a substituent, or $R_5$ and $R_6$ bind to each other to form a carbocyclic ring containing 5 to 20 carbon atoms, or a heterocyclic ring having 5 to 12 elements,

$R_7$ and $R_8$ each independently represent hydrogen, fluorine, chlorine, bromine or iodine, or an alkyl group containing 1 to 9 carbon atoms, an alkoxy group containing 1 to 5 carbon atoms, an alkenyl group containing 2 to 12 carbon atoms, or an aryl group containing 6 to 12 carbon atoms, each of which optionally has a substituent, and

b represents an integer of 0 to 20, preferably an integer of 1 to 15, and more preferably 1 to 10.

In the present invention, the constituent unit represented by the above general formula (1) comprises one or more types selected from the group consisting of constituent units represented by the following formulae (6) to (9):

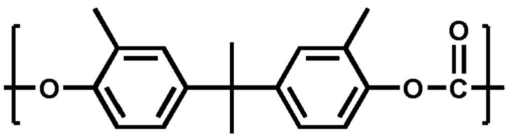
(5)

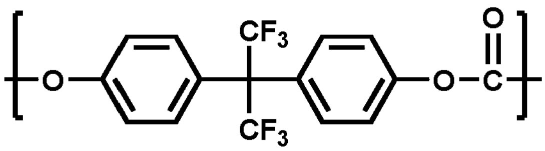
(6)

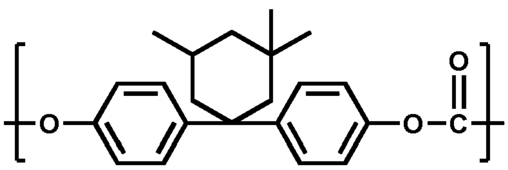
(7)

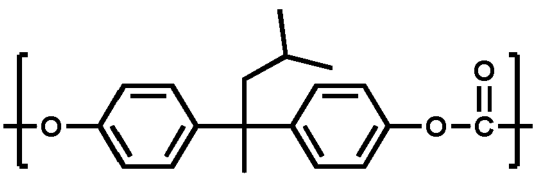
(8)

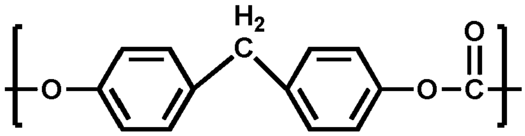
(9).

In particular, in the present invention, the constituent unit represented by the above general formula (1) preferably comprises one or more types selected from the group consisting of the constituent units represented by the above formulae (6), and (8).

In the present invention, the total percentage of the constituent units represented by the above formulae (2) to (4) in all of the constituent units represented by the general formula (1) is, at a molar percentage, 0% to 75%, preferably 0% to 70%, and more preferably 0% to 60%. Since the lower limit value of the constituent units represented by the above formulae (2) to (4) is 0%, these constituent units are any given constituent units, which may not be comprised in the constituent unit represented by the general formula (1). Herein, the constituent unit represented by the above formula (2) is a constituent unit derived from 2,2-bis(4-hydrophenyl)propane (BPA), the constituent unit represented by the above formula (3) is a constituent unit derived from 1,1-bis(4-hydrophenyl)cyclohexane (BPZ), and the constituent unit represented by the above formula (4) is a constituent unit derived from 1,1-bis(4-hydrophenyl)-1-phenylethane (BPAP).

When the constituent unit represented by the general formula (1) only consist of the constituent units derived from 2,2-bis(4-hydrophenyl)propane (BPA), 1,1-bis(4-hydrophenyl)cyclohexane (BPZ), and 1,1-bis(4-hydrophenyl)-1-phenylethane (BPAP) (namely, 100% at a molar percentage), or when the percentage of such constituent units is high, namely, when such constituent units account for more than 75%, at a molar percentage, of the constituent unit represented by the general formula (1), the solubility of the polycarbonate resin in a carbonate-based organic solvent is decreased. The molar percentage of each constituent unit can be determined based on the molar percentage of monomers used upon the synthesis of the polycarbonate resin. Moreover, it is also possible to calculate the molar percentage according to an analysis such as nuclear magnetic resonance spectroscopy.

< Polycarbonate resin >

The polycarbonate resin used in the resin composition of the present invention can be produced by allowing bisphenols inducing the constituent unit represented by the general formula (1) to react with a carbonic acid ester-forming compound. Accordingly, the polycarbonate resin can be produced according to a known method that is used to produce a polycarbonate resin derived from bisphenol A, such as, for example, a direct reaction of bisphenols with phosgene (phosgene method) or a transesterification reaction of bisphenols with bisaryl carbonate (transesterification method).

A bisphenol serving as a raw material monomer for the polycarbonate resin used in the resin composition of the present invention is represented by the following general formula (11):

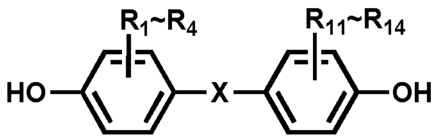
(11)

wherein $R_1$ to $R_4$, $R_{11}$ to $R_{14}$ and X are the same as those in the general formula (1).

Specific examples of the monomer represented by the above general formula (11) may include 4,4'-biphenyldiol, bis(4-hydrophenyl)methane, bis(2-hydrophenyl)methane, 2,4'-dihydroxydiphenylmethane, bis(4-hydrophenyl)ether, bis(4-hydrophenyl)sulfone, 2,4'-dihydroxydiphenylsulfone, bis(2-hydrophenyl)sulfone, bis(4-hydroxy-3-methylphenyl) sulfone, bis(4-hydrophenyl)sulfoxide, bis(4-hydrophenyl)sulfide, bis(4-hydrophenyl)ketone, 1,1-bis(4-hydrophenyl) ethane, 1,1-bis(4-hydrophenyl)-1-phenylethane, bis(4-hydrophenyl)diphenylmethane, 2,2-bis(4-hydrophenyl)propane, 2,2-bis(4-hydroxy-3-methylphenyl)propane, 1,1-bis(4-hydroxy-3-methylphenyl)ethane, bis(4-hydroxy-3-methylphenyl) methane, 2,2-bis(4-hydroxy-3-t-butylphenyl)propane, 2,2-bis(4-hydrophenyl)butane, 2,2-bis(4-hydrophenyl)hexafluoropropane, 1,1-bis(4-hydrophenyl)cyclohexane, 1,1-bis(4-hydroxy-3-methylphenyl)cyclohexane, 1,1-bis(4-hydrophenyl) cycloundecane, 1,1-bis(4-hydrophenyl)cyclododecane, 2,2-bis(4-hydroxy-3-allylphenyl)propane, 3,3,5-trimethyl-1,1-bis(4-hydrophenyl)cyclohexane, 9,9-bis(4-hydroxy-3-ethylphenyl)fluorene, 9,9-bis(4-hydroxy-3-methylphenyl)fluorene, 9,9-bis(4-hydrophenyl)fluorene, 4,4'-[1,4-phenylenebis(1-methylethylidene)]bisphenol, 4,4'-[1,3-phenylenebis(1-methylethylidene) bisphenol, 2,2-bis(4-hydrophenyl)butane, 1,1-bis(4-hydrophenyl)-2-ethylhexane, 1,1-bis(4-hydrophenyl)-2-methylpropane, 2,2-bis(4-hydrophenyl)-4-methylpentane, 1,1-bis(4-hydrophenyl)decane, and 1,3-bis(4-hydrophenyl)-5,7-dimethyladamantane. These substances can be used in combination of two or more types.

Among these, in particular, bis(4-hydrophenyl)methane (BPF), 2,2-bis(4-hydrophenyl)propane (BPA), 2,2-bis(4-hydroxy-3-methylphenyl)propane (BPC), 1,1-bis(4-hydrophenyl)cyclohexane (BPZ), 1,1-bis(4-hydrophenyl)-1-phenylethane (BPAP), 3,3,5-trimethyl-1,1-bis(4-hydrophenyl)cyclohexane (TMC), 2,2-bis(4-hydrophenyl)-4-methylpentane (MIBK), and 2,2-bis(4-hydrophenyl)hexafluoropropane (BPAF) are preferable.

Besides, a single use of 2,2-bis(4-hydrophenyl)propane (BPA), 1,1-bis(4-hydrophenyl)cyclohexane (BPZ), or 1,1-bis(4-hydrophenyl)-1-phenylethane (BPAP) is not preferable because these monomers have low solubility in a common carbonate-based organic solvent such as dimethyl carbonate, diethyl carbonate, or methyl ethyl carbonate. Accordingly, when 2,2-bis(4-hydrophenyl)propane (BPA), 1,1-bis(4-hydrophenyl)cyclohexane (BPZ), or 1,1-bis(4-hydrophenyl)-1-phenylethane (BPAP) is used as a monomer represented by the above general formula (11), the amount of 2,2-bis(4-hydrophenyl)propane (BPA), 1,1-bis(4-hydrophenyl)cyclohexane (BPZ), or 1,1-bis(4-hydrophenyl)-1-phenylethane (BPAP) in the monomers represented by the above general formula (11) is, at a molar percentage, 0% to 75%, preferably 0% to 70%, and more preferably 0% to 60%.

Further, if the solubility in an electrolyte is emphasized, the monomer is more preferably selected from among 2,2-bis(4-hydrophenyl)propane (BPA), 1,1-bis(4-hydrophenyl)cyclohexane (BPZ), 2,2-bis(4-hydroxy-3-methylphenyl)propane, 2,2-bis(4-hydrophenyl)-4-methylpentane (MIBK), and 2,2-bis(4-hydrophenyl)hexafluoropropane (BPAF).

In the phosgene method, in general, the monomer represented by the above general formula (11) is allowed to react with phosgene in the presence of an acid binder and a solvent. As such an acid binder, for example, pyridine, or a hydroxide of an alkaline metal, such as sodium hydroxide or potassium hydroxide, is used. As such a solvent, for example, methylene chloride, chloroform, or the like is used. Furthermore, in order to promote a polycondensation reaction, a catalyst that is a tertiary amine such as triethylamine or a quaternary ammonium salt such as benzyltriethylammonium chloride is preferably added. Further, for the control of a polymerization degree, a monofunctional group compound such as phenol, p-t-butylphenol, p-cumylphenol, p-hydroxyphenethyl alcohol, 2-[2-hydroxy-5-[2-(methacryloyloxy)ethyl]phenyl]-2H-benzotriazole or long-chain alkyl-substituted phenol is preferably added as a molecular weight modifier. Further, as desired, an antioxidant such as sodium sulfite or hydrosulfite, or a branching agent such as phloroglucin or isatin bisphenol, may also be added in a small amount. The reaction is appropriately carried out in a temperature range of generally 0°C to 150°C, and preferably 5°C to 40°C. The reaction time depends on the reaction temperature, and it is generally 0.5 minutes to 10 hours, and preferably 1 minute to 2 hours. In addition, during the reaction, the pH in the reaction system is desirably retained at pH 10 or more.

On the other hand, in the transesterification method, the monomer represented by the above general formula (11) is mixed with bisaryl carbonate, and the mixture is reacted under reduced pressure at a high temperature. Examples of the bisaryl carbonate may include bisaryl carbonates such as diphenyl carbonate, di-p-tolyl carbonate, phenyl-p-tolyl carbonate, di-p-chlorophenyl carbonate, and dinaphthyl carbonate. These compounds can also be used in combination of two or more types. The reaction is carried out in a temperature range of generally 150°C to 350°C, and preferably 200°C to 300°C, and the pressure reduction degree is preferably set to be 1 mmHg or less at a final stage, so that phenols derived from the bisaryl carbonates generated by the transesterification reaction are distilled away from the reaction system. The reaction time depends on the reaction temperature, the pressure reduction degree, and the like, and the reaction time is generally about 1 to 24 hours. The reaction is preferably carried out in an inert gas atmosphere such as nitrogen or argon. Moreover, as desired, a molecular weight modifier, an antioxidant, and a branching agent may be added, and the reaction may be carried out.

The polycarbonate resin used in the resin composition of the present invention preferably has, with good balance, solvent solubility, coatability, peelability, scratch resistance, impact resistance, and the like, which are needed as a coating film-forming resin. By setting the lower limit value of the liming viscosity of the resin to be a predetermined value or more, the intensity of scratch resistance and impact resistance is improved. On the other hand, by setting the upper limit value of the limiting viscosity to be a predetermined value or less, a reduction in the solvent solubility and an increase in the solution viscosity are suppressed, and coatability is maintained. The limiting viscosity of the polycarbonate resin is preferably within the range of 0.3 to 2.0 dl/g, and more preferably within the range of 0.35 to 1.5 dl/g.

The amount of the polycarbonate resin mixed in the resin composition of the present invention is 0.05% to 50% by mass. In the case of the intended use of coating, the amount of the polycarbonate resin mixed is set to be preferably 1% to 30% by mass, and more preferably 1% to 20% by mass, depending on limiting viscosity and solvent solubility. When the amount of the polycarbonate resin mixed is within the above-described range, there is a better balance between solvent solubility and coatability, and workability and appearance are improved. On the other hand, when the resin composition of the present invention is used as an electrolyte, the amount of the polycarbonate resin mixed is preferably 0.1% to 10% by mass, and more preferably 0.5% to 5% by mass. There is a case where the polycarbonate resin is precipitated if the amount of the polycarbonate resin mixed exceeds 10% by mass, although it depends on the concentration of lithium salts.

< Carbonate-based organic solvent >

The resin composition of the present invention is a solution prepared by dissolving the above-described polycarbonate resin in a carbonate-based organic solvent, and when the present resin composition is in the form of

such a solution, it is generally equivalent to a painting material called "clear color." The resin composition of the present invention may also be a colored painting material composition prepared by dissolving or dispersing a desired dye and/or pigment in the present resin composition.

In the resin composition of the present invention, at least a carbonate-based organic solvent is used as a solvent. Specific examples of the carbonate-based organic solvent may include dimethyl carbonate (hereinafter abbreviated as "DMC") that is a linear carbonate, diethyl carbonate (hereinafter abbreviated as "DEC"), methyl ethyl carbonate (hereinafter abbreviated as "MEC"), ethylene carbonate (hereinafter abbreviated as "EC") that is a cyclic carbonate, propylene carbonate, vinylene carbonate, and fluoroethylene carbonate. In the present invention, two or more types of these substances can be used in combination. Among these substances, the present carbonate-based organic solvent preferably comprises any one of DMC, DEC and MEC, in which the polycarbonate resin is comparatively highly soluble. In addition, the carbonate-based organic solvent used in the present invention preferably comprises at least one selected from DMC, DEC and MEC, and further, ethylene carbonate. In this case, taking into consideration easy precipitation of the polycarbonate resin, the content of ethylene carbonate in the carbonate-based organic solvent is preferably less than 50% by mass.

In the present invention, the content of the carbonate-based organic solvent in the resin composition is 50% to 99.95% by mass. The content of the carbonate-based organic solvent in the resin composition is preferably 70% to 99% by mass, more preferably 75% to 99% by mass, and particularly preferably 80% to 99% by mass.

In the present invention, it is preferable to use a solvent that is constituted with only a combination of carbonate-based organic solvents. However, when the present resin composition is assumed to be used as a coating liquid, organic solvents that are not poisonous and deleterious substances as defined under the Japanese Poisonous and Deleterious Substances Control Law or specified chemical substances as defined under the Industrial Safety and Health Law may be added, in a range in which the added organic solvents do not impair the effects of the present invention. Specifically, the content of such an organic solvent other than the carbonate-based organic solvent in the resin composition of the present invention can be set to be approximately 0% to 30% by mass.

On the other hand, when the intended use of the resin composition of the present invention is assumed to be an electrolyte, in order to adjust solubility or viscosity, organic solvents with low impact on the electrolyte, such as acetonitrile, Tetraglyme and sulfolane, may be added, in a range in which the added organic solvents do not impair the effects of the present invention. Specifically, the content of such organic solvents other than the carbonate-based organic solvent in the resin composition of the present invention can be set to be approximately 0% to 30% by mass.

< Optional additives >

When the resin composition of the present invention is used for coating, in order to enhance color effects, pigments, dyes, coloring particles, and particles having optical coherence can be added. Examples of such pigments and dyes may include organic pigments such as an azo pigment and a phthalocyanine pigment. Specific examples thereof may include Red No. 104, Red No. 106, Red No. 201, Red No. 202, Red No. 204, Red No. 215, Red No. 220, Orange No. 203, Orange No. 204, Blue No. 1, Blue No. 404, Yellow No. 205, Yellow No. 401, and Yellow No. 405. Moreover, in order to exhibit white color, pearlescent color, metallic color and glittery feeling, it is also possible to use titanium mica, titanium oxide, iron oxide, tin oxide, zirconium oxide, chromium oxide, bismuth oxychloride, silica, chromium, titanium nitride, titanium, magnesium fluoride, gold, silver, nickel, etc. The particles having optical coherence are particles that enhance color effects as a result of light reflection or scattering, and examples of the particles having optical coherence may include glass beads, very small shells, and mica. These additives are preferably added within the range of 0.0001% to 10.0% by mass into the resin composition, as desired.

Further, as necessary, a corrosion inhibitor, an antioxidant, a dispersant, an ultraviolet ray absorber, an antifoaming agent, a leveling agent, etc. may also be added.

The viscosity of the resin composition of the present invention may be arbitrarily set depending on desired intended use. The viscosity of the present resin composition is preferably within the range of 1 to 20,000 mPa·s, and more preferably within the range of 5 to 10,000 mPa·s. Besides, when the resin composition of the present invention is used as an electrolyte, the viscosity thereof is preferably within the range of 1 to 10,000 mPa·s, and more preferably within the range of 10 to 5,000 mPa·s.

As a method of measuring the viscosity, for example, using the vibration type viscometer (CJV5000) manufactured by A & D Co., Ltd., the viscosity can be measured at a measurement temperature of 25°C.

The thickness of a coating film, which is obtained by applying the resin composition of the present invention and then drying it, is preferably within the range of 1 to 200 μm, more preferably within the range of 5 to 120 μm, and particularly preferably in range of 10 to 60 μm. By setting the thickness of the coating film to be 1 μm or more, the surface protection strength of the coating film can be ensured. On the other hand, by setting the thickness of the coating film to be 200 μm or less, the peeling of the coating film due to the shrinking thereof is favorably suppressed.

[Electrolyte]

When the resin composition of the present invention is used as an electrolyte, it is preferable to add lithium salts in an amount of 0.1% to 30% by mass. Lithium salts are dissolved in the carbonate-based organic solvent, and specific examples of the lithium salts may include $LiPF_6$, $C_2F_6LiNO_4$, $LiClO_4$, $LiBF_4$, $LiCoO_2$, LiBOB, $LiBH_4$, $Li(FSO_2)_2N$, and $Li(CF_3SO_2)_2N$. Among these, the lithium salts preferably comprise at least one of $LiPF_6$ and $C_2F_6LiNO_4$. Moreover, a stabilizer for stabilizing the electrode surface, an overcharge inhibitor, a flame retardant or the like may be added in a small amount.

[Polymer gel electrolyte]

The electrolyte of the present invention is concentrated and is partially gelatinized, so that a polymer gel electrolyte can be obtained. The method of concentrating the electrolyte is not particularly limited, and for example, a method of removing a part of the solvent by air drying, so as to obtain a highly viscous solution having a solidified surface, may be applied.

The electrical conductivity of the polymer gel electrolyte of the present invention at 20°C is preferably 1 to 30,000 μS/cm, more preferably 10 to 20,000 μS/cm, and particularly preferably 100 to 10,000 μS/cm.

The polymer gel electrolyte of the present invention can be preferably used as a material for a lithium-ion polymer battery, an electric double layer capacitor, an electrolytic capacitor, and the like.

Examples

Hereinafter, the examples of the present invention will be described together with comparative example, and the content of the present invention will be described in detail. However, these examples are not intended to limit the scope of the present invention.

(Example 1) (reference example)

102.4 g (0.4 mol) of 2,2-Bis(4-hydroxy-3-methylphenyl-)propane (hereinafter abbreviated as "BPC"; manufactured by Honshu Chemical Industry Co., Ltd.) and 0.1 g of hydrosulfite were dissolved in 1100 ml of 5 w/w% sodium hydroxide aqueous solution.

To this solution, 500 ml of methylene chloride was added, and while stirring, 0.5 g of benzyltriethylammonium chloride (hereinafter abbreviated as "TEBAC") was added. Further, while the mixed solution was kept at 15°C, 60 g of phosgene was blown into the solution.

After completion of the blowing of phosgene into the solution, 1.5 g of p-t-butylphenol (hereinafter abbreviated as "PTBP"; manufactured by Dai Nippon Printing Co., Ltd.) was added as a molecular weight modifier to the solution, and was intensively stirred, so that the reaction solution was emulsified. After completion of the emulsification, 0.4 ml of triethylamine was added to the reaction mixture, and the thus obtained mixture was then stirred at 20°C to 25°C for about 1 hour for polymerization.

After completion of the polymerization, the reaction solution was separated into a water phase and an organic phase, and the organic phase was then neutralized with phosphoric acid. After that, water washing was repeatedly carried out until the electrical conductivity of the first solution (water phase) became 10 μS/cm or less. The obtained polymer solution was added dropwise into hot water retained at 45°C, and the solvent was then removed by evaporation to obtain a white powder precipitate. The obtained precipitate was filtrated, and was then dried at 105°C for 24 hours, so as to obtain polymer powders.

The obtained polymer was analyzed by infrared absorption spectrometry. As a result, absorption due to carbonyl groups was found at a position around $1770cm^{-1}$, and absorption due to ether bonds was found at a position around $1240cm^{-1}$, and thus, the polymer was confirmed to be a polycarbonate resin having a carbonate bond (hereinafter abbreviated as "PC-1").

The limiting viscosity of the obtained polycarbonate resin was measured according to the after-mentioned method. In addition, as described later, a resin composition comprising the obtained polycarbonate resin and each carbonate-based organic solvent was prepared, and individual resin compositions were subjected to a solvent solubility test and the measurement of a film thickness. Moreover, using the obtained polycarbonate resin, the after-mentioned Electrolyte A and Electrolyte B were prepared, and the electrical conductivity of each electrolyte was then measured. The results are shown in Table 1.

< Limiting viscosity (η) of polycarbonate resin >

The specific viscosity of a 0.5 g/dl polycarbonate resin in a methylene chloride solution was measured at a temperature of 25°C, using a Ubbelohde capillary viscometer, and thereafter, the limiting viscosity of the polycarbonate resin was calculated using a Huggins constant of 0.45 according to equation (I) as shown below.

The measurement conditions were as follows.

- Measurement apparatus: Ubbelohde capillary viscometer
- Solvent: Dichloromethane
- Resin solution concentration: 0.5 g/dl (= C)
- Measurement temperature: 25°C
- Specific viscosity: $\eta_{sp}$

Using a Huggins constant of 0.45 (k'), the limiting viscosity [η] (dl/g) was obtained according to the following equation:

$$\eta_{sp}/C = [\eta] + k'[\eta]^2C \qquad (I).$$

< Solvent solubility test >

The obtained polycarbonate resin was added into each carbonate-based organic solvent (dimethyl carbonate (DMC), diethyl carbonate (DEC), and methyl ethyl carbonate (MEC)), so that the concentration thereof became 1% by mass, 10% by mass, and 20% by mass, respectively, thereby preparing individual resin compositions. Each resin composition was placed in a glass sealed container, and it was then shaken with a shaker for 24 hours. Thereafter, the presence or absence of an undissolved matter was confirmed by visual observation. The determination criteria are as follows.

A: 20% By mass of the polycarbonate resin was completely dissolved.
B: 10% By mass of the polycarbonate resin was completely dissolved, but an undissolved matter was found in 20% by mass of the polycarbonate resin.
C: 1% By mass of the polycarbonate resin was completely dissolved, but an undissolved matter was found in 10% by mass of the polycarbonate resin.
D: 0.05% By mass of the polycarbonate resin was completely dissolved, but an undissolved matter was found in 1% by mass of the polycarbonate resin.
E: An undissolved matter was found in 0.05% by mass of the polycarbonate resin.

< Coating film properties >

The obtained polycarbonate resin was added to dimethyl carbonate (DMC) to result in a concentration of 10% by mass, thereby preparing a resin composition. The prepared resin composition was subjected to a 200 μm gap coater (only in Example 7, a 400 μm gap coater was used) to obtain a coating film. The obtained coating film was air-dried for 1 day, and was then dried at 120°C for 1 hour. The film thickness of the thus obtained coating film was measured.

< Measurement of electrical conductivity >

Using commercially available $C_2F_6LiNO_4$ (manufactured by FUJIFILM Wako Pure Chemical Corporation), a dimethyl carbonate (DMC) solution containing 0.5 mol/L $C_2F_6LiNO_4$ was prepared, and the obtained solution was defined as Solution A. 5 Parts by mass of the polycarbonate resin and 85 parts by mass of DMC were placed in a hermetically sealed container, so that the polycarbonate resin was dissolved in DMC. While 10 parts by mass of the above-described Solution A was added to the obtained solution, the solution was stirred, so as to obtain Electrolyte A.

A 1.0 mol/L $LiPF_6$ solution containing commercially available $LiPF_6$ (volume ratio of EC : DEC = 1 : 1) (LBG-96533 Electrolyte, manufactured by KISHIDA CHEMICAL CO., LTD. (1 mol/L $LiPF_6$; EC : DEC= 1 : 1 v/v%)) was defined as Solution B. Besides, "EC" indicates ethylene carbonate. 5 Parts by mass of the polycarbonate resin and 90 parts by mass of DMC were placed in a hermetically sealed container, so that the polycarbonate resin was dissolved in DMC. While 5 parts by mass of the above-described Solution B was added to the obtained solution, the solution was stirred, so as to obtain Electrolyte B. The electrical conductivity of the obtained Electrolytes A and B was measured.

The measurement apparatus: Electrical conductivity meter (waterproof electrical conductivity meter AS650,

manufactured by AS ONE Corporation)

(Example 2) (reference example)

Polymerization was carried out in the same manner as that of Example 1, with the exceptions that the amount of BPC used was changed to 60.4 g and the amount of PTBP used was changed to 1.8 g, and that, at the same time, 40.1 g of 2,2-bis(4-hydrophenyl)propane (hereinafter abbreviated as "BPA"; manufactured by Mitsubishi Chemical Corporation) was used, so as to obtain a polycarbonate resin (hereinafter abbreviated as "PC-2").
The limiting viscosity of the obtained polycarbonate resin was measured in the same manner as that of Example 1. Furthermore, the obtained polycarbonate resin was used to prepare a resin composition and an electrolyte in the same manner as that of Example 1. Thereafter, a solvent solubility test and the measurement of film thickness and electrical conductivity were carried out. The results are shown in Table 1.

(Example 3)

Polymerization was carried out in the same manner as that of Example 1, with the exceptions that, instead of BPC, 54 g of 2,2-bis(4-hydrophenyl)-4-methylpentane (hereinafter abbreviated as "MIBK"; manufactured by Honshu Chemical Industry Co., Ltd.) and 58 g of 1,1-bis(4-hydrophenyl)-1-phenylethane (hereinafter abbreviated as "BPAP"; manufactured by Honshu Chemical Industry Co., Ltd.) were used, that the amount of PTBP used was changed to 2.0 g, and that TEBAC was not used, so as to obtain a polycarbonate resin (hereinafter abbreviated as "PC-3 ").
The limiting viscosity of the obtained polycarbonate resin was measured in the same manner as that of Example 1. Furthermore, the obtained polycarbonate resin was used to prepare a resin composition and an electrolyte in the same manner as that of Example 1. Thereafter, a solvent solubility test and the measurement of film thickness and electrical conductivity were carried out. The results are shown in Table 1. It is to be noted that the measurement of the electrical conductivity of Electrolytes A and B was suspended because the polycarbonate resin was precipitated.

(Example 4)

Polymerization was carried out in the same manner as that of Example 1, with the exceptions that 108 g of MIBK was used instead of BPC, that 4.3 g of 2-[2-hydroxy-5-[2-(methacryloyloxy)ethyl]phenyl]-2H-benzotriazole (hereinafter abbreviated as "BTAZ"; manufactured by Otsuka Chemical Co., Ltd.) was used instead of PTBP, and that TEBAC was not used, so as to obtain a polycarbonate resin (hereinafter abbreviated as "PC-4").
The limiting viscosity of the obtained polycarbonate resin was measured in the same manner as that of Example 1. Furthermore, the obtained polycarbonate resin was used to prepare a resin composition and an electrolyte in the same manner as that of Example 1. Thereafter, a solvent solubility test and the measurement of film thickness and electrical conductivity were carried out. The results are shown in Table 1.

(Example 5)

Polymerization was carried out in the same manner as that of Example 1, with the exceptions that, instead of BPC, 36.0 g of bis(4-hydrophenyl)methane (hereinafter abbreviated as "BPF"; manufactured by Sanko Co., Ltd.) and 50.2 g of BPA were used, that the amount of PTBP used was changed to 0.93 g, and that TEBAC was not used, so as to obtain a polycarbonate resin (hereinafter abbreviated as "PC-5").
The limiting viscosity of the obtained polycarbonate resin was measured in the same manner as that of Example 1. Furthermore, the obtained polycarbonate resin was used to prepare a resin composition and an electrolyte in the same manner as that of Example 1. Thereafter, a solvent solubility test and the measurement of film thickness and electrical conductivity were carried out. The results are shown in Table 1. It is to be noted that the measurement of the electrical conductivity of Electrolytes A and B was suspended because the polycarbonate resin was precipitated.

(Example 6) (reference example)

Polymerization was carried out in the same manner as that of Example 1, with the exceptions that the amount of BPC used was changed to 60.4 g, and that, at the same time, 40.1 g of BPA and 1.92 g of p-hydroxyphenethyl alcohol (hereinafter abbreviated as "PHEP"; manufactured by Otsuka Chemical Co., Ltd.) were used, so as to obtain a polycarbonate resin (hereinafter abbreviated as "PC-6").
The limiting viscosity of the obtained polycarbonate resin was measured in the same manner as that of Example 1. Furthermore, the obtained polycarbonate resin was used to prepare a resin composition and an electrolyte in the same manner as that of Example 1. Thereafter, a solvent solubility test and the measurement of film thickness and electrical

conductivity were carried out. The results are shown in Table 1.

(Example 7)

Polymerization was carried out in the same manner as that of Example 1, with the exceptions that 124.0 g of 3,3,5-trimethyl-1,1-bis(4-hydrophenyl)cyclohexane (hereinafter abbreviated as "TMC"; manufactured by Sanko Co., Ltd.) was used instead of BPC, that the amount of PTBP used was changed to 1.62 g, and that TEBAC was not used, so as to obtain a polycarbonate resin (hereinafter abbreviated as "PC-7").

The limiting viscosity of the obtained polycarbonate resin was measured in the same manner as that of Example 1. Furthermore, the obtained polycarbonate resin was used to prepare a resin composition and an electrolyte in the same manner as that of Example 1. Thereafter, a solvent solubility test and the measurement of film thickness and electrical conductivity were carried out. The results are shown in Table 1. It is to be noted that the measurement of the electrical conductivity of Electrolytes A and B was suspended because the polycarbonate resin was precipitated.

(Example 8)

Polymerization was carried out in the same manner as that of Example 1, with the exceptions that, instead of BPC, 94.1 g of BPAF, 27.4 g of BPA and 1.10 g of PHEP were used, and that PTBP was not used, so as to obtain a polycarbonate resin (hereinafter abbreviated as "PC-8").

The limiting viscosity of the obtained polycarbonate resin was measured in the same manner as that of Example 1. Furthermore, the obtained polycarbonate resin was used to prepare a resin composition and an electrolyte in the same manner as that of Example 1. Thereafter, a solvent solubility test and the measurement of film thickness and electrical conductivity were carried out. The results are shown in Table 1.

(Example 9) (reference example)

2.0 g of PC-1 obtained in Example 1 and 8.0 g of diethyl carbonate (DEC) were weighed, and were then placed in a 100 ml beaker, and PC-1 was dissolved in DEC by stirring the solution with a Teflon stirrer. After completion of the dissolution, while stirring, 1.0 ml of the aforementioned Solution B (LBG-96533 Electrolyte, manufactured by KISHIDA CHEMICAL CO., LTD. (1 mol/L $LiPF_6$; EC : DEC = 1 : 1 v/v%)) was added dropwise into the reaction solution. When this Solution B was mixed with the reaction solution, the stirring was terminated, and the mass was measured (wherein the mass of the reaction solution excluding those of the beaker and the stirrer was 11.2 g before concentration). Thereafter, the beaker was left in a draft chamber for 24 hours, and a part of the solvent was removed by air drying, so as to obtain a highly viscous solution having a solidified surface. The mass of the solution was 8.1 g (after concentration). Thereafter, an electrical conductivity meter was inserted into this partially gelatinized (solvent-including) polymer gel electrolyte, and the electrical conductivity was then measured. The results are shown in Table 2.

Besides, the electrical conductivity was measured with the following apparatus.

The measurement apparatus: Electrical conductivity meter (waterproof electrical conductivity meter AS650, manufactured by AS ONE Corporation)

(Example 10)

2.0 g of PC-8 obtained in Example 8 and 8.0 g of DEC were weighed, and were then placed in a 100 ml beaker, and PC-8 was dissolved in DEC by stirring the solution with a Teflon stirrer. After completion of the dissolution, while stirring, 2.5 ml of the aforementioned Solution B was added dropwise into the reaction solution. When this Solution B was mixed with the reaction solution, the stirring was terminated, and the mass was measured (wherein the mass of the reaction solution excluding those of the beaker and the stirrer was 13.0 g before concentration). Thereafter, the beaker was left in a draft chamber for 24 hours, and a part of the solvent was removed by air drying, so as to obtain a highly viscous solution having a solidified surface. The mass of the solution was 7.1 g (after concentration). Thereafter, an electrical conductivity meter was inserted into this partially gelatinized (solvent-including) polymer gel electrolyte, and the electrical conductivity was then measured in the same manner as that of Example 9. The results are shown in Table 2.

(Comparative Example 1)

Polymerization was carried out in the same manner as that of Example 1, with the exceptions that 91.2 g of BPA was used instead of BPC, that the amount of PTBP used was changed to 2.00 g, and that TEBAC was not used, so as to obtain a polycarbonate resin (hereinafter abbreviated as "PC-9").

The limiting viscosity of the obtained polycarbonate resin was measured in the same manner as that of Example

1. In addition, the obtained polycarbonate resin was used to prepare a resin composition in the same manner as that of Example 1, and the prepared resin composition was subjected to a solvent solubility test. Moreover, using the resin composition prepared in the same manner as that of Example 1, a coating film was intended to be formed. However, a coating film could not be formed. Furthermore, Electrolytes A and B were prepared in the same manner as that of Example 1. The measurement of the electrical conductivity of Electrolytes A and B was suspended because the polycarbonate resin was precipitated. The results are shown in Table 1.

(Comparative Example 2)

Polymerization was carried out in the same manner as that of Example 1, with the exceptions that 107.2 g of BPZ was used instead of BPC, that the amount of PTBP used was changed to 2.00 g, and that TEBAC was not used, so as to obtain a polycarbonate resin (hereinafter abbreviated as "PC-10").

The limiting viscosity of the obtained polycarbonate resin was measured in the same manner as that of Example 1. In addition, the obtained polycarbonate resin was used to prepare a resin composition in the same manner as that of Example 1, and the prepared resin composition was subjected to a solvent solubility test. Moreover, using the resin composition prepared in the same manner as that of Example 1, a coating film was intended to be formed. However, a coating film could not be formed. Furthermore, Electrolytes A and B were prepared in the same manner as that of Example 1. The measurement of the electrical conductivity of Electrolytes A and B was suspended because the polycarbonate resin was precipitated. The results are shown in Table 1.

(Comparative Example 3)

Polymerization was carried out in the same manner as that of Example 1, with the exceptions that 116.0 g of BPAP was used instead of BPC, that the amount of PTBP used was changed to 2.00 g, and that TEBAC was not used, so as to obtain a polycarbonate resin (hereinafter abbreviated as "PC-11").

The limiting viscosity of the obtained polycarbonate resin was measured in the same manner as that of Example 1. In addition, the obtained polycarbonate resin was used to prepare a resin composition in the same manner as that of Example 1, and the prepared resin composition was subjected to a solvent solubility test. Moreover, using the resin composition prepared in the same manner as that of Example 1, a coating film was intended to be formed. However, a coating film could not be formed. Furthermore, Electrolytes A and B were prepared in the same manner as that of Example 1. The measurement of the electrical conductivity of Electrolytes A and B was suspended because the polycarbonate resin was precipitated. The results are shown in Table 1.

(Comparative Example 4)

Polymerization was carried out in the same manner as that of Example 1, with the exceptions that, instead of BPC, 14.8 g of 4,4'-biphenyldiol (hereinafter abbreviated as "BP"; manufactured by Honshu Chemical Industry Co., Ltd.) and 73.0 g of BPA were used, that the amount of PTBP used was changed to 1.30 g, and that TEBAC was not used, so as to obtain a polycarbonate resin (hereinafter abbreviated as "PC-12").

The limiting viscosity of the obtained polycarbonate resin was measured in the same manner as that of Example 1. In addition, the obtained polycarbonate resin was used to prepare a resin composition in the same manner as that of Example 1, and the prepared resin composition was subjected to a solvent solubility test. Moreover, using the resin composition prepared in the same manner as that of Example 1, a coating film was intended to be formed. However, a coating film could not be formed. Furthermore, Electrolytes A and B were prepared in the same manner as that of Example 1. The measurement of the electrical conductivity of Electrolytes A and B was suspended because the polycarbonate resin was precipitated. The results are shown in Table 1.

(Comparative Example 5)

A composition was prepared in the same manner as that of Example 1, with the exceptions that the polycarbonate resin was not used, and that the mass fraction of the polycarbonate resin was replaced with dimethyl carbonate (DMC). A coating film was intended to be formed using the obtained composition, but such a coating film could not be formed. Furthermore, Electrolytes A and B were prepared in the same manner as that of Example 1, with the exceptions that the polycarbonate resin was not used, and that the mass fraction of the polycarbonate resin was replaced with dimethyl carbonate (DMC), and the electrical conductivity thereof was then measured. The results are shown in Table 1.

[Table 1]

| | Polycarbonate resin | | | | Solvent solubility test | | | Coating film properties | Electrical conductivity (μS/cm) | |
|---|---|---|---|---|---|---|---|---|---|---|
| | Polycarbonate type | Raw material monomers (molar ratio) | Terminal stopper | Limiting viscosity [dl/g] | DMC | DEC | MEC | Film thickness (μm) | Electrolyte A | Electrolyte B |
| Example 1 | PC-1 | BPC (100) | PTBP | 0.65 | A | A | A | 15 | 1.6 | 19.8 |
| Example 2 | PC-2 | BPC/BPA (57/43) | PTBP | 0.58 | A | A | A | 15 | 1.4 | 15.2 |
| Example 3 | PC-3 | MIBK/BPAP (50/50) | PTBP | 0.49 | A | A | A | 15 | Resin precipitated | Resin precipitated |
| Example 4 | PC-4 | MIBK (100) | BTAZ | 0.54 | A | A | A | 15 | 1.4 | 14.1 |
| Example 5 | PC-5 | BPF/BPA (45/55) | PTBP | 0.51 | A | A | A | 14 | Resin precipitated | Resin precipitated |
| Example 6 | PC-6 | BPC/BPA (57/43) | PHEP | 0.72 | A | A | A | 15 | 1.4 | 26.0 |
| Example 7 | PC-7 | TMC (100) | PTBP | 0.48 | A | A | A | 16 | Resin precipitated | Resin precipitated |
| Example 8 | PC-8 | BPAF/BPA= (70/30) | PHEP | 0.55 | A | A | A | 14 | 1.4 | 17.2 |
| Comp.Ex. 1 | PC-9 | BPA(100) | PTBP | 0.49 | E | E | E | Not formed | Resin precipitated | Resin precipitated |
| Comp.Ex. 2 | PC-10 | BPZ (100) | PTBP | 0.44 | E | E | E | Not formed | Resin precipitated | Resin precipitated |
| Comp.Ex. 3 | PC-11 | BPAP (100) | PTBP | 0.43 | E | E | E | Not formed | Resin precipitated | Resin precipitated |
| Comp.Ex. 4 | PC-12 | BP/BPA = (20/80) | PTBP | 0.76 | E | E | E | Not formed | Resin precipitated | Resin precipitated |
| Comp.Ex. 5 | No PC components | | | | | | | Not formed | 1.6 | 19.3 |
| (Examples 1, 2 and 6 are reference examples) | | | | | | | | | | |

[Table 2]

| Composition at time point in which Solution B was mixed and stirring was terminated (before concentration) | | | | |
|---|---|---|---|---|
| | Polycarbonate type | Polycarbonate component (% by mass) | Li salt component (% by mass) | Carbonate solvent (% by mass) |
| Example 9 | PC-1 | 17.9 | 1.4 | 80.7 |
| Example 10 | PC-8 | 15.4 | 2.9 | 81.7 |

Composition and electrical conductivity of highly viscous solution with solidified surface after removal of part of solvent (after concentration)

| | Polycarbonate type | Polycarbonate component (% by mass) | Li salt component (% by mass) | Carbonate solvent (% by mass) | Electrical conductivity μS/cm |
|---|---|---|---|---|---|
| Example 9 | PC-1 | 24.7 | 1.9 | 73.4 | 20 |
| Example 10 | PC-8 | 28.2 | 5.4 | 66.4 | 108 |
| (Example 9 is a reference example) | | | | | |

| | | |
|---|---|---|
| BPC | TMC | PTBP |
| 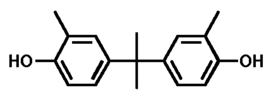 | 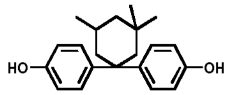 | 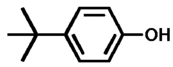 |
| MIBK | BPZ | BTAZ |
| 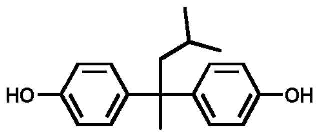 | 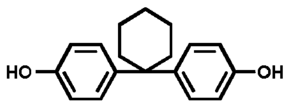 | 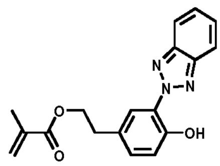 |
| BPAP | BPAF | PHEP |
| 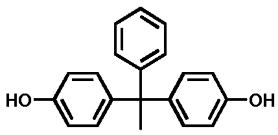 | 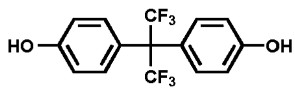 | 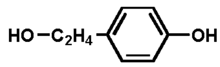 |
| BPA | BP | BPF |
| 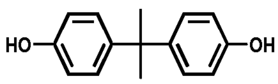 | 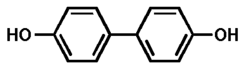 | 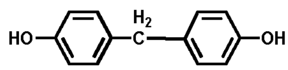 |

Industrial Applicability

The resin composition of the present invention is a resin composition prepared by dissolving a highly soluble polycarbonate resin in a carbonate-based organic solvent, and this resin composition has low toxicity and is preferable as a coating material (a painting material or an ink) onto various types of substrates. Moreover, the present resin composition is compatible with lithium salts, and thus, even though the polycarbonate resin is dissolved, the resin composition maintains high conductivity and is useful as an electrolyte. In particular, the resin composition of the present invention is useful for modification of an SEI (Solid Electrolyte Interphase) layer of the electrolyte of a lithium-ion battery or a lithium-ion polymer battery, and is able to impart flame retardance and the like to a lithium-ion battery or a lithium-ion polymer battery.

Furthermore, a concentrated solution of the electrolyte of the present invention can be gelatinized, and can be applied as a polymer gel electrolyte of a lithium-ion polymer battery.

## Claims

**1.** A resin composition, comprising:

a polycarbonate resin comprising a constituent unit represented by the following general formula (1):

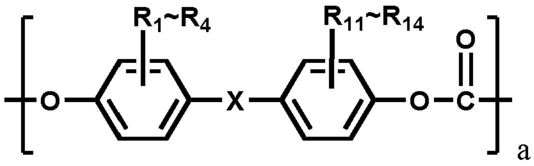
(1)

wherein
$R_1$ to $R_4$ and $R_{11}$ to $R_{14}$ each independently represent hydrogen, fluorine, chlorine, bromine or iodine, or an alkyl group containing 1 to 20 carbon atoms, an aryl group containing 6 to 12 carbon atoms, an alkenyl group containing 2 to 12 carbon atoms, an alkoxy group containing 1 to 5 carbon atoms, or an aralkyl group containing 7 to 17 carbon atoms, each of which optionally has a substituent,
a represents an integer of 1 to 1,000, and
X represents the following:

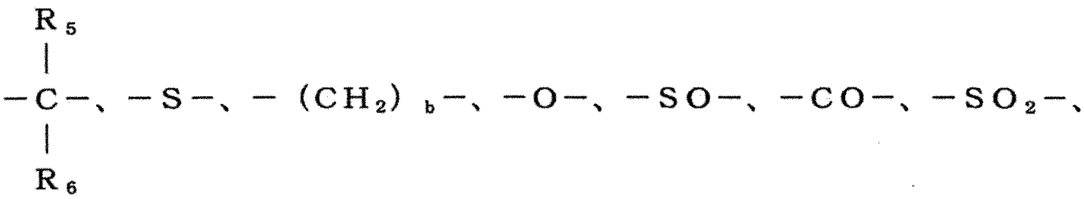

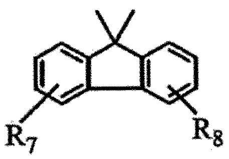 、 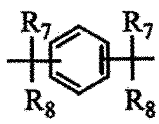 or 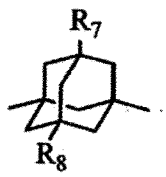

wherein, $R_5$ and $R_6$ each independently represent hydrogen, fluorine, chlorine, bromine or iodine, or an alkyl group containing 1 to 20 carbon atoms, an alkoxy group containing 1 to 5 carbon atoms, or an aryl group containing 6 to 12 carbon atoms, each of which optionally has a substituent, or $R_5$ and $R_6$ bind to each other to form a carbocyclic ring containing 5 to 20 carbon atoms, or a heterocyclic ring having 5 to 12 elements,
$R_7$ and $R_8$ each independently represent hydrogen, fluorine, chlorine, bromine or iodine, or an alkyl group containing 1 to 9 carbon atoms, an alkoxy group containing 1 to 5 carbon atoms, an alkenyl group containing 2 to 12 carbon atoms, or an aryl group containing 6 to 12 carbon atoms, each of which optionally has a substituent, and
b represents an integer of 0 to 20; and
a carbonate-based organic solvent, wherein
a content of the polycarbonate resin in the resin composition is 0.05% to 50% by mass,
a content of the carbonate-based organic solvent in the resin composition is 50% to 99.5% by mass, and
a total percentage of constituent units represented by the following formulae (2) to (4) in all of the constituent units represented by the general formula (1) is 0% to 75% at a molar percentage:

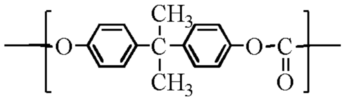
(2)

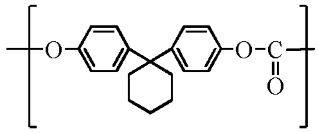

(3)

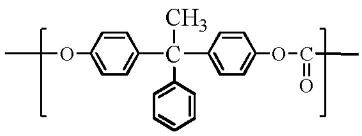

(4)

wherein the constituent unit represented by the general formula (1) comprises one or more types selected from the group consisting of constituent units represented by the following formulae (6) to (9):

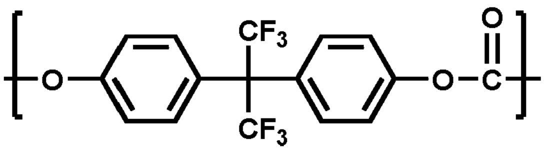

(6)

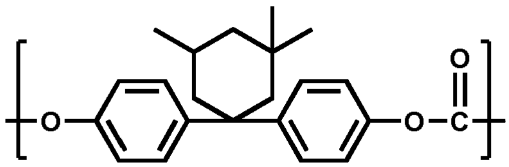

(7)

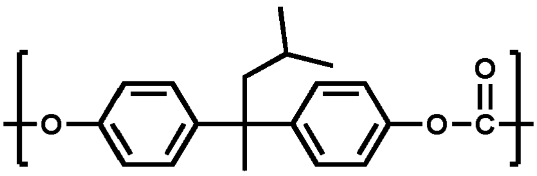

(8)

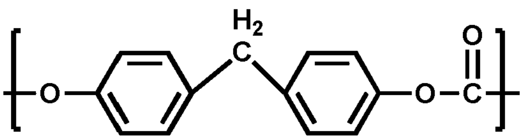

(9).

2. The resin composition according to claim 1, wherein the content of the carbonate-based organic solvent in the resin composition is 70% to 99% by mass.

3. The resin composition according to claim 1 or 2, wherein the carbonate-based organic solvent comprises at least one type selected from the group consisting of dimethyl carbonate, diethyl carbonate, and methyl ethyl carbonate.

4. The resin composition according to claim 3, wherein the carbonate-based organic solvent further comprises ethylene carbonate.

5. The resin composition according to any one of claims 1 to 4, wherein the constituent unit represented by the general formula (1) comprises one or more types selected from the group consisting of the constituent units represented by the formulae (6), and (8).

6. The resin composition according to any one of claims 1 to 5, wherein the polycarbonate resin has a limiting viscosity of 0.3 to 2.0 dl/g and the limiting viscosity is determined as described in the description.

7. The resin composition according to any one of claims 1 to 6, which does not comprise organic solvents other than the

carbonate-based organic solvent.

8. A coating film formed by drying the resin composition according to any one of claims 1 to 7.

9. An electrolyte, in which 0.1% to 30% by mass of lithium salts are dissolved in the resin composition according to any one of claims 1 to 7.

10. The electrolyte according to claim 9, wherein the lithium salts comprise at least one of $LiPF_6$ and $C_2F_6LiNO_4$.

11. A polymer gel electrolyte prepared by gelatinizing the electrolyte according to claim 9 or 10.

12. The polymer gel electrolyte according to claim 11, wherein an electrical conductivity is 1 to 30,000 μS/cm and the electrical conductivity is determined as described in the description.

**Patentansprüche**

1. Harzzusammensetzung, umfassend:

ein Polycarbonatharz, umfassend eine durch die folgende allgemeine Formel (1) dargestellte Bestandteilseinheit:

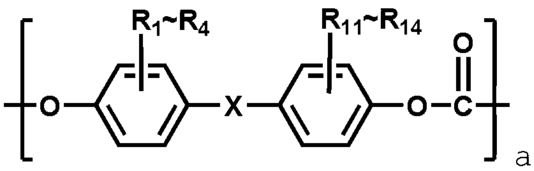
(1)

worin
$R_1$ bis $R_4$ und $R_{11}$ bis $R_{14}$ jeweils unabhängig Wasserstoff, Fluor, Chlor, Brom oder Iod, oder eine Alkylgruppe mit 1 bis 20 Kohlenstoffatomen, eine Arylgruppe mit 6 bis 12 Kohlenstoffatomen, eine Alkenylgruppe mit 2 bis 12 Kohlenstoffatomen, eine Alkoxygruppe mit 1 bis 5 Kohlenstoffatomen oder eine Aralkylgruppe mit 7 bis 17 Kohlenstoffatomen, von denen jede gegebenenfalls einen Substituenten aufweist, darstellen,
a eine ganze Zahl von 1 bis 1.000 darstellt und
X folgendes darstellt:

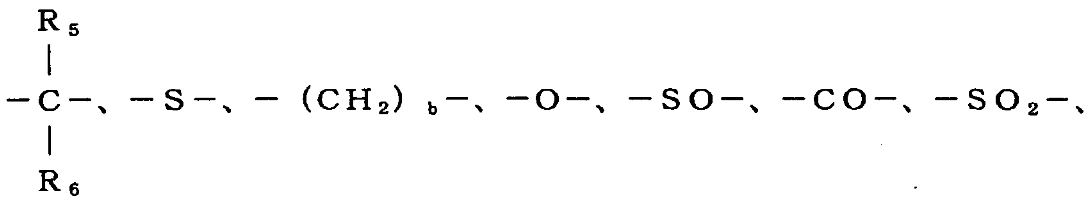

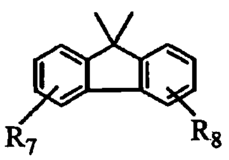
,
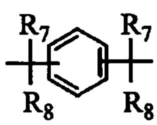
oder
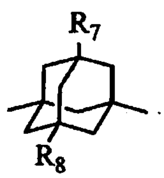
.

worin $R_5$ und $R_6$ jeweils unabhängig Wasserstoff, Fluor, Chlor, Brom oder Iod, oder eine Alkylgruppe mit 1 bis 20 Kohlenstoffatomen, eine Alkoxygruppe mit 1 bis 5 Kohlenstoffatomen oder eine Arylgruppe mit 6 bis 12 Kohlenstoffatomen, von denen jede gegebenenfalls einen Substituenten aufweist, darstellen, oder $R_5$ und $R_6$ aneinander binden, so dass ein carbocyclischer Ring mit 5 bis 20 Kohlenstoffatomen oder ein heterocyclischer Ring mit 5 bis 12 Elementen ausgebildet ist,
$R_7$ und $R_8$ jeweils unabhängig Wasserstoff, Fluor, Chlor, Brom oder Iod, oder eine Alkylgruppe mit 1 bis 9 Kohlenstoffatomen, eine Alkoxygruppe mit 1 bis 5 Kohlenstoffatomen, eine Alkenylgruppe mit 2 bis 12 Kohlenstoffatomen, oder eine Arylgruppe mit 6 bis 12 Kohlenstoffatomen, von denen jede gegebenenfalls einen Substituenten aufweist, darstellen, und

b eine ganze Zahl von 0 bis 20 darstellt; und

ein Carbonat-basiertes organisches Lösungsmittel, worin

ein Gehalt des Polycarbonatharzes in der Harzzusammensetzung 0,05 Massen-% bis 50 Massen-% beträgt,

ein Gehalt des Carbonat-basierten organischen Lösungsmittels in der Harzzusammensetzung 50 Massen-% bis 99,5 Massen-% beträgt und

ein Gesamtanteil der durch die folgenden Formeln (2) bis (4) dargestellten Bestandteilseinheiten in allen durch die allgemeine Formel (1) dargestellten Bestandteilseinheiten 0% bis 75% als molarer Anteil beträgt:

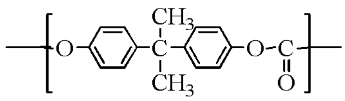
(2)

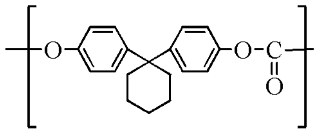
(3)

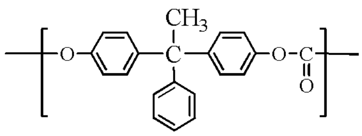
(4)

worin die durch die allgemeine Formel (1) dargestellte Bestandteilseinheit eine oder mehrere Arten umfasst, ausgewählt aus der Gruppe, bestehend aus durch die folgenden Formeln (6) bis (9) dargestellten Bestandteilseinheiten:

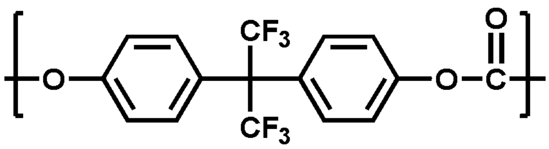
(6)

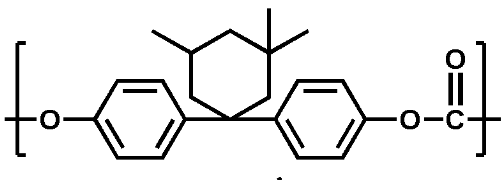
(7)

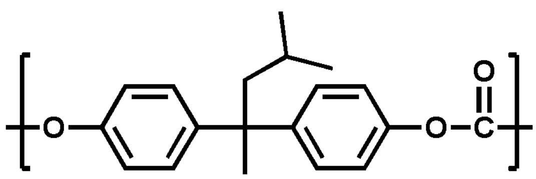
(8)

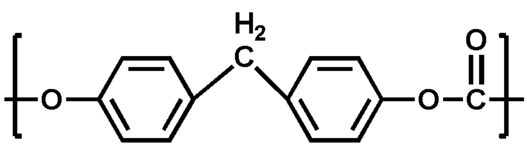
(9) .

2. Harzzusammensetzung gemäß Anspruch 1, worin der Gehalt des Carbonat-basierten organischen Lösungsmittel in der Harzzusammensetzung 70 Massen-% bis 99 Massen-% beträgt.

3. Harzzusammensetzung gemäß Anspruch 1 oder 2, worin das Carbonat-basierte organische Lösungsmittel mindestens eine Art umfasst, ausgewählt aus der Gruppe, bestehend aus Dimethylcarbonat, Diethylcarbonat and Methylethylcarbonat.

4. Harzzusammensetzung gemäß Anspruch 3, worin das Carbonat-basierte organische Lösungsmittel ferner Ethylencarbonat umfasst.

5. Harzzusammensetzung gemäß einem der Ansprüche 1 bis 4, worin die durch die allgemeine Formel (1) dargestellte Bestandteilseinheit eine oder mehrere Arten umfasst, ausgewählt aus der Gruppe, bestehend aus den durch die Formeln (6) und (8) dargestellten Bestandteilseinheiten.

6. Harzzusammensetzung gemäß einem der Ansprüche 1 bis 5, worin das Polycarbonatharz eine limitierende Viskosität von 0,3 bis 2,0 dl/g aufweist und die limitierende Viskosität wie in der Beschreibung beschrieben bestimmt wird.

7. Harzzusammensetzung gemäß einem der Ansprüche 1 bis 6, die außer dem Carbonat-basierten organischen Lösungsmittel kein anderes organisches Lösungsmittel umfasst.

8. Beschichtungsfilm, der durch Trocknen der Harzzusammensetzung gemäß einem der Ansprüche 1 bis 7 ausgebildet ist.

9. Elektrolyt, in dem 0,1 Massen-% bis 30 Massen-% Lithiumsalze in der Harzzusammensetzung gemäß einem der Ansprüche 1 bis 7 gelöst sind.

10. Elektrolyt gemäß Anspruch 9, worin die Lithiumsalze mindestens eines von $LiPF_6$ und $C_2F_6LiNO_4$ umfassen.

11. Polymergel-Elektrolyt, der durch Gelierung des Elektrolyten gemäß Anspruch 9 oder 10 hergestellt ist.

12. Polymergel-Elektrolyt gemäß Anspruch 11, worin eine elektrische Leitfähigkeit 1 bis 30.000 μS/cm beträgt und die elektrische Leitfähigkeit wie in der Beschreibung beschrieben bestimmt wird.

## Revendications

1. Composition de résine, comprenant :

une résine de polycarbonate comprenant un motif constitutif représenté par la formule générale (1) suivante :

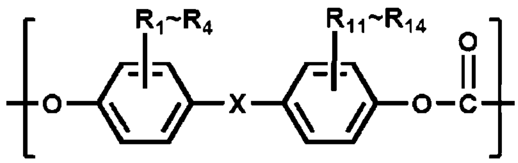

a (1)

dans laquelle
$R_1$ à $R_4$ et $R_{11}$ à $R_{14}$ représentent chacun indépendamment hydrogène, fluor, chlore, brome ou iode, ou un groupe alkyle contenant 1 à 20 atomes de carbone, un groupe aryle contenant 6 à 12 atomes de carbone, un groupe alcényle contenant 2 à 12 atomes de carbone, un groupe alcoxy contenant 1 à 5 atomes de carbone, ou un groupe aralkyle contenant 7 à 17 atomes de carbone, chacun d'eux présente éventuellement un substituant,
a représente un nombre entier de 1 à 1 000, et
X représente ce qui suit :

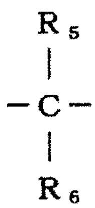
、$-S-$、$-(CH_2)_b-$、$-O-$、$-SO-$、$-CO-$、$-SO_2-$、

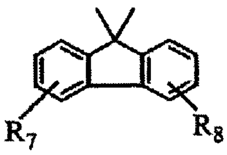 、 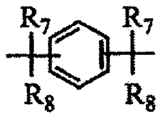 ou 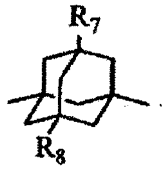

dans laquelle, $R_5$ et $R_6$ représentent chacun indépendamment hydrogène, fluor, chlore, brome ou iode, ou un groupe alkyle contenant 1 à 20 atomes de carbone, un groupe alcoxy contenant 1 à 5 atomes de carbone, ou un groupe aryle contenant 6 à 12 atomes de carbone, chacun d'eux présente éventuellement un substituant, ou $R_5$ et $R_6$ se lient l'un à l'autre pour former un cycle carbocyclique contenant 5 à 20 atomes de carbone, ou un cycle hétérocyclique présentant 5 à 12 éléments,

$R_7$ et $R_8$ représentent chacun indépendamment hydrogène, fluor, chlore, brome ou iode, ou un groupe alkyle contenant 1 à 9 atomes de carbone, un groupe alcoxy contenant 1 à 5 atomes de carbone, un groupe alcényle contenant 2 à 12 atomes de carbone, ou un groupe aryle contenant 6 à 12 atomes de carbone, chacun d'eux présente éventuellement un substituant, et b représente un nombre entier de 0 à 20 ; et un solvant organique à base de carbonate, dans laquelle

une teneur en résine de polycarbonate dans la composition de résine est de 0,05 % à 50 % en masse,

une teneur en solvant organique à base de carbonate dans la composition de résine est de 50 % à 99,5 % en masse, et

un pourcentage total de motifs constitutifs représentés par les formules (2) à (4) suivantes dans tous les motifs constitutifs représentés par la formule générale (1) est de 0 % à 75 % en pourcentage molaire :

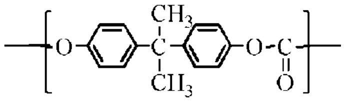 (2)

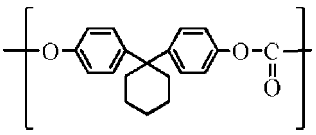 (3)

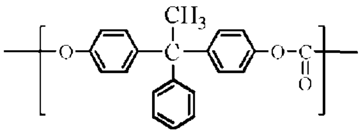 (4)

dans laquelle le motif constitutif représenté par la formule générale (1) comprend un ou plusieurs types sélectionnés dans le groupe consistant en des motifs constitutifs représentés par les formules (6) à (9) suivantes :

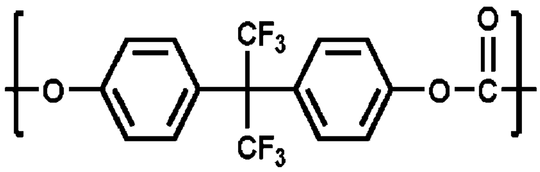 (6)

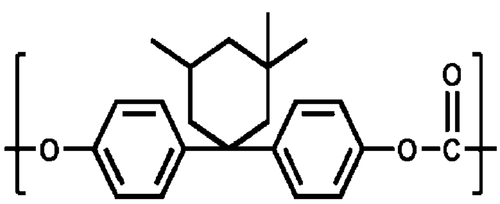 (7)

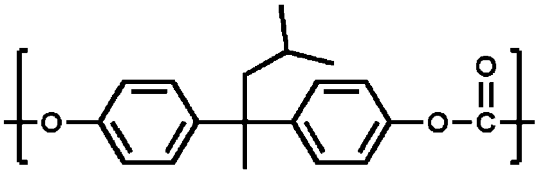
(8)

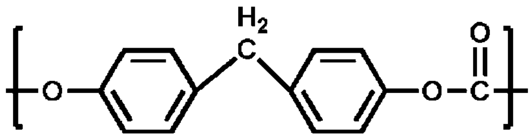
(9).

2. Composition de résine selon la revendication 1, dans laquelle la teneur en solvant organique à base de carbonate dans la composition de résine est de 70 % à 99 % en masse.

3. Composition de résine selon la revendication 1 ou la revendication 2, dans laquelle le solvant organique à base de carbonate comprend au moins un type sélectionné dans le groupe consistant en du carbonate de diméthyle, du carbonate de diéthyle et du carbonate de méthyléthyle.

4. Composition de résine selon la revendication 3, dans laquelle le solvant organique à base de carbonate comprend en outre du carbonate d'éthylène.

5. Composition de résine selon l'une quelconque des revendications 1 à 4, dans laquelle le motif constitutif représenté par la formule générale (1) comprend un ou plusieurs types sélectionnés dans le groupe consistant en des motifs constitutifs représentés par les formules (6) et (8).

6. Composition de résine selon l'une quelconque des revendications 1 à 5, dans laquelle la résine de polycarbonate présente une viscosité limite de 0,3 à 2,0 dl/g et la viscosité limite est déterminée telle que décrite dans la description.

7. Composition de résine selon l'une quelconque des revendications 1 à 6, qui ne comprend pas de solvant organique autre que le solvant organique à base de carbonate.

8. Film de revêtement formé par séchage de la composition de résine selon l'une quelconque des revendications 1 à 7.

9. Électrolyte, dans lequel 0,1 % à 30 % en masse de sels de lithium sont dissous dans la composition de résine selon l'une quelconque des revendications 1 à 7.

10. Électrolyte selon la revendication 9, dans lequel les sels de lithium comprennent au moins un élément parmi $LiPF_6$ et $C_2F_6LiNO_4$.

11. Électrolyte en gel polymère préparé par gélatinisation de l'électrolyte selon la revendication 9 ou la revendication 10.

12. Électrolyte en gel polymère selon la revendication 11, dans lequel une conductivité électrique est de 1 à 30 000 μS/cm et la conductivité électrique est déterminée telle que décrite dans la description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001325990 A
- CN 105811002 A
- WO 2018123282 A
- JP 2000357533 A